(19) **Europäisches Patentamt**
**European Patent Office**
**Office européen des brevets**

(11) **EP 4 516 831 A1**

(12) **EUROPEAN PATENT APPLICATION**

(43) Date of publication:
05.03.2025 Bulletin 2025/10

(21) Application number: 23315329.5

(22) Date of filing: 28.08.2023

(51) International Patent Classification (IPC):
$C08G\ 18/30^{(2006.01)}$    $C08G\ 18/32^{(2006.01)}$
$C08G\ 18/40^{(2006.01)}$    $C08G\ 18/42^{(2006.01)}$
$C08G\ 18/48^{(2006.01)}$    $C08G\ 18/76^{(2006.01)}$
$C09J\ 175/04^{(2006.01)}$    $C08G\ 18/12^{(2006.01)}$
$D06M\ 17/10^{(2006.01)}$

(52) Cooperative Patent Classification (CPC):
(C-Sets available)
C08G 18/7671; C08G 18/12; C08G 18/3206;
C08G 18/4018; C08G 18/42; C08G 18/4825;
C08G 18/4829; C08G 18/4854; C09J 175/04;
D06M 17/10; C08G 2170/20      (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **Bostik SA**
**92700 Colombes (FR)**

(72) Inventors:
• **Ma, Xiaowei**
**Shanghai (CN)**
• **Wei, Jiangong**
**Shanghai (CN)**

(74) Representative: **Arkema Patent**
**Arkema France**
**DRD-DPI**
**420, rue d'Estienne d'Orves**
**92705 Colombes Cedex (FR)**

(54) **A REACTIVE HOT MELT ADHESIVE COMPOSITION, AN ARTICLE COMPRISING THE SAME AND USE THEREOF**

(57) The invention relates to a reactive hot melt adhesive composition comprising a urethane prepolymer having an isocyanate group at the end, and at least one polyether-based thermoplastic polyurethane, wherein the urethane prepolymer is obtained by a reaction of a polyisocyanate and a polyol, and the polyol comprises at least one polyester polyol. The invention also relates to an article comprising at least one substrate and a cured adhesive formed by the reactive hot melt adhesive composition according to the invention, and use of the same for bonding two substrates.

EP 4 516 831 A1

(52) Cooperative Patent Classification (CPC): (Cont.)

C-Sets
**C08G 18/10, C08G 18/307;**
**C08G 18/12, C08G 18/307**

**Description**

## TECHNICAL FIELD

The present invention relates to the field of moisture-curable hot melt adhesives. More specifically, the invention relates to a reactive hot melt adhesive composition which is excellent in elastic recovery, peel strength and low in hardness.

## TECHNICAL BACKGROUND

Reactive polyurethane hot melt adhesives (hereinafter referred to as "HMPUR") are widely used because they are solvent-free, easy to be applied, no need to mix two components during usage. Urethane prepolymer with isocyanate termination is usually used as one of the main components of HMPUR, which could be heated to a molten state for coating and curing with moisture in the air or on the surface of the substrate or other substances containing active hydrogen to produce a strong bond.

With the continuous pursuing for high quality life in recent years, knitted garments have an increasingly broad market. Reactive hot melt adhesives can be applied to bond textiles, especially in the field of garment or lingerie manufacturing, to replace sewing and heat-sealing tapes, which simplifies the process, shortens production cycles, saves costs, and is beneficial for providing more competitive products in the market.

WO2021159377A1 discloses a reactive hot melt adhesive composition for bonding textile to textile, which comprises at least one NCO-terminated polyurethane prepolymer, the NCO-terminated polyurethane prepolymer comprises the reaction product of a) at least one polyisocyanate, b) at least one polyol selected from polytetrahydrofurans, polybutadiene polyols, hydrogenated polybutadiene polyols, polycarbonate polyols and combinations thereof, and c) optionally, at least one polyol different from component b).

Although the reactive hot melt adhesives on the market have certain elasticity and bonding strength, it is still underperforming when applied to some sportswear and underwear with high elasticity. Especially, when applied to the side bones of seamless sports pants, bras and sportswear, it would affect the comfort of seamless sportswear, shorten the service life and does not improve the quality and beauty of the garments. Therefore, it is still necessary to develop a hot melt adhesive composition with high tensile strength, elastic recovery, adhesive property, and low hardness, which is easy to process in the application of garment.

## SUMMARY OF THE INVENTION

It has now been found that the composition according to the present application meets these needs. It was found notably that the particular combination according to the present application, combining a particular urethane prepolymer, a particular polyether-based thermoplastic polyurethane, preferably at particular contents, led to a composition having improved adhesive power, tensile properties, unexpected elastic recovery and a reduced hardness. Moreover, it was found that this combination has an appropriate viscosity to apply it to the substrate in a relatively low temperature, and thus is cost saving and easy to process.

Therefore, provided is a reactive hot melt adhesive composition comprising

a urethane prepolymer having an isocyanate group at the end, and
at least one polyether-based thermoplastic polyurethane,
wherein the urethane prepolymer is obtained by a reaction of a polyisocyanate and a polyol, and the polyol comprises at least one polyester polyol.

Preferably, based on the total weight of the composition, the content of the polyether-based thermoplastic polyurethane is 1-50 wt%, preferably 8-35 wt %, more preferably 11-25 wt%.

Preferably, the polyether-based thermoplastic polyurethane has a Shore A hardness of 40-90, preferably 50-80, more preferably 60-75.

Preferably, the polyether-based thermoplastic polyurethane is a reaction product of at least a poly(tetrahydrofuran)-containing polyether polyol, an aliphatic polyol and an aromatic polyisocyanate, preferably the polyether-based thermoplastic polyurethane is a reaction product of at least poly(tetrahydrofuran), butylene glycol and methylene diphenyl diisocyanate.

Particularly, the polyether-based thermoplastic polyurethane is obtained from a mixture comprising 55-75wt% of poly (tetrahydrofuran)-containing polyether polyol, 1-1 0wt% of aliphatic polyol, 20-40wt% of aromatic polyisocyanate, based on the total weight of the mixture.

Preferably, the molar ratio of the total isocyanate groups in the polyisocyanate to the total hydroxyl groups in the polyol (NCO/OH) is in a range of 1.05 to 6, preferably 1.1 to 2.5, more preferably 1.2 to 1.8.

Preferably, the at least one polyester polyol comprises a non-crystalline polyester polyol.

Preferably, the polyol further comprises at least one polyether polyol, preferably, the at least one polyether polyol comprises a linear polyether polyol, a non-linear polyether polyol or a combination thereof.

In one embodiment, the polyol comprises, based on the total weight of the polyols:

18-100 wt% of a polyester polyol, preferably 20-30 wt%;
0-65 wt% of a linear polyether polyol, preferably 45-60 wt%; and
0-32 wt% of a non-linear polyether polyol, preferably 15-30wt%.

Preferably, the polyol comprises, based on the total weight of the polyols: 40-50 wt% of a polyester polyol and 50-60 wt% of a linear polyether polyol.

Preferably, the number average molecular weight (Mn) of the linear polyether polyol is 200-4,000 g/mol.

Provided is an article comprising at least one substrate and a cured adhesive formed by the reactive hot melt adhesive composition according to the invention. Preferably, the at least one substrate is textile.

Preferably, the article of the invention is a garment or an underwear.

Provided is also use of the reactive hot melt adhesive composition according to the invention for bonding two substrates, wherein at least one of the two substrates is textile.

## DESCRIPTION OF THE INVENTION

### General definitions and terms

The invention is further described in detail below, and it is to be understood that the terms are for the purpose of description but not intended to limit the invention.

The technical and scientific terms used herein have the same meaning as commonly understood by one of ordinary skill in the art to which this invention belongs, unless otherwise indicated. In the event of a conflict, the definition provided in this application shall prevail.

As used herein, the singular forms "a," "an," and "the" are intended to include the plural forms as well, unless the context clearly indicates otherwise. For example, "a polyol" has the same meaning as "at least one polyol" and "one or more polyol", unless the context clearly indicates otherwise.

It will be further understood that the terms "comprising", "comprise(s)" as used herein are synonymous with "including", "include(s)" or "containing", "contains". The terms "comprise(s)" and/or "comprising," or "include(s)" and/or "including" when used in this specification, specify the presence of stated features (members, components, method steps or the like), but do not preclude the presence or addition of one or more other non-recited features.

The recitation of numerical ranges by endpoints includes all integer numbers and, where appropriate, fractions subsumed within that range, (e.g. 1 to 5 can include 1, 2, 3, 4, 5 when referring to, for example, a number of elements, and can also include, e.g., 1.5, 2, 2.75 and 3.80, when referring to, for example, content). The recitation of numerical ranges by end points also includes the end point values themselves (e.g. from 1.0 to 5.0 includes both 1.0 and 5.0). Any numerical range recited herein is intended to include all sub-ranges subsumed therein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

Preferred features and embodiments of the invention are set herein below. Any feature indicated as being preferred or advantageous may be combined with any other feature or features or statements indicated as being preferred or advantageous.

The various groups, radicals and letters which are included in the formulas described in the present application retain throughout the present text the same definition, unless otherwise stated.

The term "optional" or "optionally" as used herein means that the subsequently described event or circumstance may or may not occur. The description includes the occurrence or non-occurrence of the event or circumstance, as well as the arbitrary selection of the subsequently described content.

Unless otherwise indicated, percentages, parts, and the like herein are provided by weight.

The term "one or more" or "at least one", as used herein, means one, two, three, four, five, six, seven, eight or more.

The term "two or more" as used herein, means two, three, four, five, six, seven, eight or more.

Unless otherwise stated, standards mentioned throughout the present application are those in effect on the date the application is filed.

The term "room temperature" as used herein refers to about 20 to 30 °C, such as about 25 °C.

As used herein, the average molecular weight is the number average molecular weight. The number average molecular weight could be detected by conventional method in the art, for example, by gel permeation chromatography method with polystyrene as calibration.

By "about X", it is intended more or less 10% the value of X.

As used herein, the term "a urethane prepolymer" should be understood to be an oligourethane having isocyanate groups which is to be regarded as an intermediate on the way to the crosslinked polyurethanes.

As used herein, the term "polyisocyanate" includes an isocyanate compound having two or more isocyanate groups (-NCO), as well as oligomers or polymers formed therefrom, such as trimers. The polyisocyanate may be aliphatic or aromatic. Aliphatic includes alicyclic herein. The polyisocyanate may also comprise other substituents which do not significantly and adversely affect the performance of the composition of the present invention such as viscosity or adhesion. Exemplary polyisocyanate includes but not limited to 2,2'-methylene diphenyl diisocyanate (MDI), 4,4'-methylene diphenyl diisocyanate, 2,4'-methylene diphenyl diisocyanate, 2,4-toluene diisocyanate (TDI). 2,6-toluene diisocyanate, 1,3-phenylene diisocyanate (PDI), 1,4-phenylene diisocyanate, 1,4-naphthalene-diisocyanate (NDI), 1, 5-naphthylene diisocyanate, tetramethyl xylylene diisocyanate (TMXDI), 4,4'-dibenzyl diisocyanate, xylylene diisocyanate (XDI), butane-1,4-diisocyanate, 1,6-hexamethylene diisocyanate (HMDI), 1,6-diisocyanate-2,2,4-trimethyl hexane, 1,12-diisocyanate-dodecane, isophorone diisocyanate (IPDI), 4,4-dicyclohexyl methane diisocyanate, 1,3-cyclohexane diisocyanate, 1,4-cyclohexane diisocyanate, 1-methyl-2,4-diisocyanate-cyclohexane and their combinations.

The "aliphatic polyol" in this context refers to an aliphatic polyol having two or more hydroxyl groups. Aliphatic polyol having a hydrocarbon side chain and straight-chain aliphatic polyol are included. Exemplary aliphatic polyol includes but not limited to glycerin, trimethylolpropane, 1,2,4-butanetriol, 1,2,5-pentanetriol, 1,2,6-hexanetriol, pentaerythritol, dipentaerythritol, neopentyl glycol, 2-methyl-1, 3-propanediol, 2,2-diethyl-1,3-propanediol, 2-methyl-2-propyl-1,3-propanediol, 2-butyl-2-ethyl-1,3-propanediol, 3-methyl-1,5-pentanediol, 2-methyl-2,4-pentanediol, 2,4-diethyl-1,5-pentanediol, 1,3,5-trimethyl-1,3-pentanediol, 2-methyl-1,6-hexanediol, 2-methyl-1,8-octanediol, 2-methyl-1,9-nonanediol, ethylene glycol, propylene glycol, butylene glycol, pentanediol, hexanediol, octanediol, nonanediol, decanediol, octadecanediol and cyclohexanediol, and their combinations.

As used herein, "crystalline polyester polyol" should be understood as a polyester polyol with a crystallinity of at least 10%, including a semi-crystalline polyester polyol. A "non-crystalline polyester polyol" refers to a polyester polyol with a crystallinity of lower than 10%, for example, 9%, 8% 7%, 6% ,5%, 4%, 3%, 2%, 1%, or an amorphous polyester polyol. A "crystallinity" refers to a proportion of a crystalline region in a polymer, expressed in percentage. The crystallinity could be determined by a wide-angle X-ray diffraction (WAXD) method. Specifically, by integration based on the WAXD diffraction spectrum, the crystallinity (%) is equal to a ratio of a crystalline diffraction peak area to the sum of the crystalline diffraction peak area and a non-crystalline diffraction peak area multiplied by 100%. The crystallinity could be determined by a Bruker D8 ADVANCE DaVinci X-ray diffractometer in the present invention. The non-crystalline polyester polyol could be linear or branched.

Hardness may be measured according to ASTM D2240-15 by a Shore A durometer, for example as described in the testing methods of the Examples below.

Viscosity may be measured according to ASTM D3236-15, for example as described in the testing methods of the Examples below.

Tensile strength and elongation may be measured according to ASTM D412-16 (Test Method A, die C), for example as described in the testing methods of the Examples below.

The peel strength may be measured according to ASTM D1876-08, for example as described in the testing methods of the Examples below.

The elastic recovery may be measured with a tensile tester, for example as described in the testing methods of the Examples below.

The reactive hot melt adhesive composition according to the invention and the article comprising the same will be described in detail below.

In one aspect, provided is a reactive hot melt adhesive composition comprising

a urethane prepolymer having an isocyanate group at the end, and
at least one polyether-based thermoplastic polyurethane (hereinafter referred to as "polyether-based TPU"),
wherein the urethane prepolymer is obtained by a reaction of a polyisocyanate and a polyol, and the polyol comprises at least one polyester polyol.

Polyether-based TPU

it is surprising to find that with the addition of the polyether-based thermoplastic polyurethane (TPU), desired elastic recovery, hardness and peel strength could be obtained when applied in garments.

The wording "thermoplastic polyurethane" herein has the conventional means commonly used in the art. For example, it could be explained as the materials which are capable of softening or melting when heated and of hardening when cooled, and are able to repeat the processes.

Preferably, the polyether-based TPU according to the invention has a Shore A hardness of 40-90, preferably 50-80, more preferably 60-75. The polyether-based TPU with this ranges would be beneficial for providing a softer adhesive composition with higher elastic recovery. For example, the polyether-based TPU could have a Shore A hardness of 40, 42, 44, 46, 48, 50, 52, 54, 56, 58, 60, 62, 64, 66, 68, 70, 72, 74, 76, 78, 80, 82, 84, 86, 88, 90.

Preferably, the polyether-based TPU according to the invention is a reaction product of reactants containing polyether polyol and polyisocyanate. Advantageously, the polyether-based TPU is a reaction product of reactants containing at least a poly(tetrahydrofuran)-containing polyether polyol, an aliphatic polyol and an aromatic polyisocyanate. Preferably, the polyether-based TPU is a reaction product of a poly(tetrahydrofuran)-containing polyether polyol, an aliphatic polyol and an aromatic polyisocyanate. The amount of polyether contained in the polyether-based TPU may be at least 50 wt%, preferably at least 60 wt%, for example, 50-80 wt%, e,g, 60, 65, 66, 67, 68, 69, 70, 75, 80 wt%, based on the total weight of the polyether-based TPU.

The "poly(tetrahydrofuran)-containing polyether polyol" refers to a polyether polyol containing at least 30 wt% poly(tetrahydrofuran), preferably containing at least 50 wt%, more preferably containing at least 70wt%, most preferably containing at least 85 wt%, for example, containing at least 40wt%, at least 50wt%, at least 60 wt%, at least 70wt%, at least 80wt%, at least 90wt%, or 100wt% poly(tetrahydrofuran), with respect to the total weight of the poly(tetrahydrofuran)-containing polyether polyol. Other component(s) except poly(tetrahydrofuran) could be those conventionally used in the art, e.g., polytrimethylene ether glycol, polyethylene oxide, polypropylene oxide. The number average molecular weight (Mn) of the poly(tetrahydrofuran) may be 150-4000 g/mol.

Preferably, the aliphatic polyol is aliphatic diol. The aliphatic polyol may be neopentyl glycol, 2-methyl-1, 3-propanediol, 2,2-diethyl-1,3-propanediol, 2-methyl-2-propyl-1,3-propanediol, 2-butyl-2-ethyl-1,3-propanediol, 3-methyl-1,5-pentanediol, 2-methyl-2,4-pentanediol, 2,4-diethyl-1,5-pentanediol, 1,3,5-trimethyl-1,3-pentanediol, 2-methyl-1,6-hexanediol, 2-methyl-1,8-octanediol, 2-methyl-1,9-nonanediol, ethylene glycol, propylene glycol, butylene glycol,'pentanediol, hexanediol, octanediol, nonanediol, decanediol, octadecanediol and/or cyclohexanediol, preferably ethylene glycol, propylene glycol, butylene glycol, pentanediol and/or hexanediol, particularly butylene glycol.

The term "aromatic polyisocyanate" here refers to the polyisocyanate having aromatic group within its structure and having two or more isocyanate groups (-NCO). Preferably, the aromatic polyisocyanate is an aromatic diisocyanate. The aromatic polyisocyanate may be 2,2'-methylene diphenyl diisocyanate (MDI), 4,4'-methylene diphenyl diisocyanate, 2,4'-methylene diphenyl diisocyanate, 2,4-toluene diisocyanate (TDI). 2,6-toluene diisocyanate, 1,3-phenylene diisocyanate (PDI), 1,4-phenylene diisocyanate, 1,4-naphthalene-diisocyanate (NDI), 1,5-naphthylene diisocyanate, tetramethyl xylylene diisocyanate (TMXDI), 4,4'-dibenzyl diisocyanate and/or xylylene diisocyanate (XDI), preferably 2,2'-methylene diphenyl diisocyanate (MDI), 4,4'-methylene diphenyl diisocyanate and/or 2,4'-methylene diphenyl diisocyanate.

Preferably, the polyether-based TPU is a linear polyether-based TPU. In particular, the polyether-based TPU is a reaction product of (at least) poly(tetrahydrofuran), butylene glycol and methylene diphenyl diisocyanate. The polyether-based TPU may be commercially available, for example, the polyether-based TPU could be PEARLBOND™ 360 from Lubrizol Corporation, WHT-8670 from Wanhua Chemical Group Co.,Ltd., Desmopan® 6064A, 6072A, 6080A, 9370A, and 9380A from Covestro AG, Elastollan® SP1150A, SP1155A, 1160A, 1170A, 1175A, 1180A, 1185A, 1190A from BASF.

Advantageously, the polyether-based TPU does not contain ester groups.

in an embodiment, the polyether-based TPU is obtained from a mixture comprising 55-75wt% of poly(tetrahydrofuran)-containing polyether polyol, 1-10wt% of aliphatic polyol, 20-40wt% of aromatic polyisocyanate, based on the total weight of the mixture. For example, the poly (tetrahydrofuran)-containing polyether polyol could be used in an amount of 55, 56, 57, 58, 59, 60, 61, 62, 63, 64, 65, 66, 67, 68, 69, 70, 71, 72, 73, 74, 75 wt%, based on the total weight of the mixture. The aliphatic polyol could be used in an amount of 1, 2, 3, 4, 5, 6, 7, 8, 9, 10 wt%, based on the total weight of the mixture. The aromatic polyisocyanate could be used in an amount of 20, 21, 22, 23, 24, 25, 26, 27, 28, 29, 30, 31, 32, 33, 34, 35, 36, 37, 38, 39, 40 wt%, based on the total weight of the mixture.

Based on the total weight of the composition according to the invention, the content of the polyether-based TPU may be 1-50 wt%, preferably 8-35 wt %, more preferably 11-25wt%, for example, 1, 3, 5, 7, 9, 11, 12, 13, 15, 17, 18, 19, 20, 21, 23, 25, 27, 28, 29, 31, 33, 35, 37, 39, 41, 42, 43, 45, 47, 49, 50wt%. The suitable ranges of the polyether-based TPU is beneficial for obtaining an adhesive composition which is softer, and higher in elastic recovery.

Urethane prepolymer

The urethane prepolymer is obtained by a reaction of a polyisocyanate and a polyol, and the polyol comprises at least one polyester polyol.

The polyester polyol may be obtained by the reaction of reactant(s) containing carboxylic acids with polyol(s).

Advantageously, the at least one polyester polyol comprises a non-crystalline polyester polyol, preferably consists of one or more non-crystalline polyester polyols.

The non-crystalline polyester polyol may comprise linear liquid polyester polyol. Preferably, the non-crystalline polyester polyol is a linear liquid polyester polyol. In the context of the present invention, a "liquid polyester polyol" is a polyester polyol which is liquid at room temperature (e.g. 18-25°C).

In a specific embodiment, the non-crystalline polyester polyol is obtained by the reaction of reactant(s) containing carboxylic acids with aliphatic polyol(s), preferably obtained by the reaction of reactant(s) containing dicarboxylic acids with aliphatic diol(s). For example, the reactant containing carboxylic acids may be phthalic acid, isophthalic acid, terephthalic acid, phthalic anhydride, oxalic acid, malonic acid, succinic acid, adipic acid, sebacic acid, nonanedioic acid and/or 1,12-dodecanedicarboxylic acid, preferably phthalic acid, isophthalic acid, terephthalic acid, adipic acid, sebacic acid, and/or nonanedioic acid. For example, the aliphatic diol may be ethylene glycol, neopentyl glycol, propylene glycol, butylene glycol, pentanediol, hexanediol, octanediol, nonanediol, decanediol, octadecanediol and/or cyclohexanediol, preferably ethylene glycol, neopentyl glycol, propylene glycol, butylene glycol, pentanediol and/or hexanediol. For example, the non-crystalline polyester polyol could be obtained from the reaction of isophthalic acid, sebacic acid, ethylene glycol, and neopentyl glycol.

The non-crystalline polyester polyol may be commercially available, for example, the non-crystalline polyester polyol could be ETEROL 5100-1000, 5120, 5209-3500, 5256-5500, 5300, 5401 from Eternal Materials Co., Ltd., XCP-1000PM, XCP-2000PM, XCP-3000PM, XCP-1000M, XCP-2000M, XCP-3000M, XCP-R2170, XCP-R2570 from Xuchuan Chemical (Suzhou) Co., Ltd., DYNACOLL® 7210, 7230, 7231, 7250, 7255 from Evonik Degussa (China) Co., Ltd., FJ-20030 from SYNTHESIA INTERNACIONAL.

The number average molecular weight (Mn) of the polyester polyol may be 1,000-8,000 g/mol, preferably 2,000-7,000 g/mol, for example 2,500, 3,000, 3,500, 4,000, 4,500, 5,000, 5,500, 6,000, 6,500, 7,000, 7,500, 8,000 g/mol.

The polyol may comprise, based on the total weight of the polyols, 18-100 wt% of a polyester polyol, for example, 20, 23, 25, 30, 35, 40, 43, 45, 50, 55, 60, 65, 70, 75, 80, 85, 90, 95, 100 wt%. The suitable amount of polyester polyol is beneficial for well-dissolving the polyether-based TPU and obtaining an adhesive composition with adequate hardness and elastic recovery.

The polyol may further comprise at least one polyether polyol. Preferably, the at least one polyether polyol comprises a linear polyether polyol, a non-linear polyether polyol or a combination thereof.

Polyether polyol herein includes the addition or mixed addition of compounds of tetrahydrofuran, styrene oxide, ethylene oxide, propylene oxide, butylene oxide or epichlorohydrin, which may be prepared using di-to hexa-functional starter molecules, such as, water, ethylene glycol, 1,2- or 1,3-propylene glycol, bisphenol A, neopentylglycol, glycerol, trimethylolpropane, pentaerythritol, sorbitol, etc.

Linear polyether polyol preferably refers to these with the addition products of ethylene oxide or of propylene oxide or of mixtures thereof reacted with difunctional materials, for example ethylene glycol, propylene glycol or water, for example, propylene glycol polyether. The linear polyether polyol could be commercially available. For example, the linear polyether polyol could be VORANOL™ P 400, 1000LM, 2000LM, 3000M, 4000LM from DOW Chemical Pacific Limited, CHE-204, CHE-210, CHE-220, CHE-2070E from Changhua Chemical Technologhy Co.,Ltd., WANOL® C2004, C2010D, C2020, C2030, C2040D from Wanhua Chemical Group Co., Ltd.. In this context, the linear polyether polyol could be used alone or in combination.

The number average molecular weight (Mn) of the linear polyether polyol may be 200-4,000 g/mol, for example, 500, 800, 1,000, 1,500, 2,000, 2,500, 3,000, 3,500, 4,000 g/mol.

The polyol may comprise, based on the total weight of the polyols, 0-65 wt% of a linear polyether polyol, for example, 0, 5, 10, 15, 20, 25, 30, 35, 40, 45, 50, 52, 55, 58, 60, 65 wt%. Excessive linear polyether polyol may reduce the peel strength and elastic recovery. A suitable content of linear polyether polyol would help in obtaining an adhesive composition which is softer and higher in elastic recovery.

Non-linear polyether polyol refers to these with the addition products of components comprising one or more tri-- or higher--functional materials, for example glycerol, pentaerythritol or trimethylol propane. For example, the product of methylene oxide with ethylene oxide and 1,2,3-propanetriol. The non-linear polyether polyol could be commercially available. For example, the non-linear polyether polyol could be WANOL® C3040D, C3050D, C3110, F3128, F3135, F3140, F3147, F3150, F3170, F3056D from Wanhua Chemical Group Co., Ltd., CHE-304, CHE-330N, CHE-628, CHE-632N, CHE-828from Changhua Chemical Technologhy Co.,Ltd. VORANOL™ 1447, 2100, 2140, 3003, 3022J, 4701, 4702, 8010 from DOW Chemical Pacific Limited. In this context, the non-linear polyether polyol could be used alone or in combination.

The number average molecular weight (Mn) of the non-linear polyether polyol may be 1,000-8,000 g/mol, preferably 2,000-7,000 g/mol, for example 2,500, 3,000, 3,500, 4,000, 4,500, 5,000, 5,500, 6,000, 6,500, 7,000, 7,500, 8,000 g/mol.

The polyol may comprise, based on the total weight of the polyols, 0-32 wt% of a linear polyether polyol, for example, 0. 5, 6, 7, 8, 9,10, 11, 12, 13, 14, 15, 16, 17, 18, 19, 20, 21, 22, 23, 24, 25, 26, 27, 28, 29, 30, 31, 32 wt%. The suitable amount of the linear polyether polyol would be beneficial for obtaining an adhesive composition with preferable hardness, and thus the garments using the same would be softer and have better wearing experience.

In particular, the polyol may comprise (or consist of), based on the total weight of the polyols: 18-100 wt% of a polyester polyol; 0-65 wt% of a linear polyether polyol; and 0-32 wt% of a non-linear polyether polyol.

In a first embodiment, the polyol comprises (or consists of), based on the total weight of the polyols: 18-55 wt% of a polyester polyol, 45-65 wt% of a linear polyether polyol and 0-32 wt% of a non-linear polyether polyol. For example, the polyol comprises (or consists of), based on the total weight of the polyols: 40-50 wt% of a polyester polyol and 50-60 wt% of a linear polyether polyol. Alternatively, the polyol comprises (or consists of), based on the total weight of the polyols: 20-30 wt% of a polyester polyol; 45-60 wt% of a linear polyether polyol; and 15-30 wt% of a non-linear polyether polyol, preferably 20-28 wt% of a polyester polyol; 48-55 wt% of a linear polyether polyol; and 20-28 wt% of a non-linear polyether polyol.

In a second embodiment, the polyol is a polyester polyol, more preferably, a non-crystalline polyester polyol.

The polyol according to the invention could also contain one or more polyols conventionally used in the art, which includes but not limited to castor oil, vegetable oil, the products of hydroxylation of unsaturated or polyunsaturated natural oils, the products of hydrogenations of unsaturated or polyunsaturated polyhydroxyl natural oils, polyhydroxyl esters of alkyl hydroxyl fatty acids, polymerized natural oils, alkylhydroxylated amides of fatty acids, polybutadiene diol, polyisobutylene diol and mixtures thereof.

The polyisocyanates usable for preparing the urethane prepolymer used according to the invention are widely available commercially. The polyisocyanate could be used alone or in combination. Preferably, the polyisocyanate is aromatic polyisocyanate.

The polyisocyanate may be selected from 2,2'-methylene diphenyl diisocyanate (MDI), 4,4'-methylene diphenyl diisocyanate, 2,4'-methylene diphenyl diisocyanate, 2,4-toluene diisocyanate (TDI). 2,6-toluene diisocyanate, 1,3-phenylene diisocyanate (PDI), 1,4-phenylene diisocyanate, 1,4-naphthalene-diisocyanate (NDI), 1, 5-naphthylene diisocyanate, tetramethyl xylylene diisocyanate (TMXDI), 4,4'-dibenzyl diisocyanate, xylylene diisocyanate (XDI) , polymeric MDI and their combinations thereof, preferably 2,2'-methylene diphenyl diisocyanate (MDI), 4,4'-methylene diphenyl diisocyanate, and/or 2,4'-methylene diphenyl diisocyanate. For example, it could be a mixture of 2,4' and 4,4' diphenylmethane diisocyanates.

The polyisocyanate could be commercially available. For example, polyisocyanate could be WANNATE® MDI-50 from Wanhua Chemical Group Co.,Ltd., DESMODUR 2460 M from Covestro Deutschland AG, LUPRANATE MIP from BASF.

In this context, the polyether-based TPU is not deemed as a kind of polyol, for the reactive hydroxyl group therein could be neglected when compared with the polyether polyol or polyester polyol.

In an embodiment, the molar ratio of the total isocyanate groups in the polyisocyanate to the total hydroxyl groups in the polyol (NCO/OH) is in a range of 1.05 to 6, preferably 1.1 to 2.5, more preferably 1.2 to 1.8, for example, 1.1, 1.2, 1.3, 1.4, 1.5, 1.6, 1.7, 1.8, 1.9, 2, 2.2, 2.4, 2.6, 2.8, 3, 3.5, 4, 4.5, 5, 5.5, 6. The molar ratio of NCO/OH refers to the molar equivalent ratio in the system, i.e., the molar ratio of the number of isocyanate groups of the polyisocyanate to the number of hydroxyl groups of polyol used for synthesis of the polyurethane. In this context, the NCO/OH is obtained by the above-mentioned calculation. The molar ratio of NCO/OH in the said ranges is beneficial for the suitable crosslinking of the prepolymer, and thus the obtained adhesive composition has the needed viscosity easy to process.

Based on the total weight of the composition, the content of the urethane prepolymer is 50-99 wt%, preferably 65-92 wt%, more preferably 75-89 wt%, for example, 53, 55, 58, 60, 63, 65, 68, 70, 72, 75, 78, 80, 82, 85, 88, 90, 92, 95, 97, 99 wt%.

Additives

The hot melt adhesive composition according to the present invention can also contain other additives as long as the additives do not exert an adverse influence on the final properties of the composition, or on the reaction of the polyol with the polyisocyanate to form the urethane prepolymer. The additives conventionally used include but are not limited to plasticizers, ultraviolet absorbers, antioxidants, flame retardants, catalysts, waxes and pigments.

Examples of the "plasticizer" include but are not limited to dibutyl phthalate, dioctyl adipate, dioctyl phthalate, and mineral spirit.

Examples of the "ultraviolet absorber" include but are not limited to hindered amine, benzotriazole, benzoate, and hydroxyphenyltriazine.

Examples of the "antioxidant" include but are not limited to phenol based antioxidants, thioether based antioxidants, phosphate based antioxidants, and amine based antioxidants.

Examples of the "flame retardant" include but are not limited to halogen based flame retardants, antimony based flame retardants, phosphorous based flame retardants, and metal hydroxide based flame retardants.

Examples of the "catalyst" include but are not limited to metal based catalysts such as tin based catalysts (trimethyltin hydroxide, trimethyltin laurate, dibutyltin dilaurate, and dibutyltin maleate), lead based catalysts (lead naphthenate, lead oleate, and lead octoate), and other metal based catalysts (naphthenic acid metal salts such as cobalt naphthenate) and amine based catalysts such as tetramethylethylenediamine, triethylenediamine, diazabicycloalkenes, tetramethylhexylenediamine, and dialkylaminoalkylamines.

Examples of the "wax" include but are not limited to waxes such as paraffin wax and microcrystalline wax.

Examples of the "pigment" include but are not limited to titanium oxide and carbon black.

The additives could be added in an amount of less than 10 wt%, for example, in an amount of 9, 8, 7, 6, 5, 4, 3, 2, 1, 0.5, 0 wt% based on the total weight of the composition.

In this context, all the components used for the preparation of the adhesive composition could be bio-based or non bio-based.

## The reactive hot melt adhesive composition

In an embodiment, the reactive hot melt adhesive composition comprises, based on the total weight of the composition:

1-50 wt%, preferably 8-35 wt%, more preferably 11-25 wt% of the at least one polyether-based TPU;
50-99 wt%, preferably 65-92wt%, more preferably 75-89wt% of the urethane prepolymer;
0-10 wt%, preferably 0-5 wt%, more preferably 0-2 wt% of one or more additives.

The ingredients of this embodiment are as described above, including the embodiments and preferred features.

The reactive hot melt adhesive composition according to the invention may have a viscosity at 150°C of 5,000 to 80,000 mPa.s, preferably 10,000 to 40,000 mPa.s, more preferably 12,000 to 30,000 mPa.s. For example, the viscosity could be 5,000, 8,000, 10,000, 13,000, 16,000, 19,000, 22,000, 25,000, 26,000, 28,000, 31,000, 34,000, 37,000, 40,000, 43,000, 46,000, 49,000, 52,000, 55,000, 58,000, 60,000, 61,000, 62,000, 63,000, 64,000, 65,000, 68,000, 70,000, 75,000, 80,000 mPa.s.

The reactive hot melt adhesive composition advantageously has low hardness and viscosity, high elastic recovery and peel strength and suitable tensile properties.

In one embodiment, the reactive hot melt adhesive composition has one of the following properties, preferably all of the following properties:

a) Shore A hardness of less than 70, preferably less than or equal to 65; more preferably less than 60
b) Elastic recovery of more than 90%, preferably more than 95%; more preferably more than 96%;
c) Peel strength of more than 45 N/25mm, preferably more than 50N/25mm.

The hot melt adhesive composition according to the invention could be processed as follows.

i) dissolving the polyether-based TPU at evaluated temperature with mixing of polyester polyol,
ii) adding one or more polyols other than the polyester polyol optionally thereby,
iii) adding polyisocyanate to react so as to form the adhesive composition.

Between each of the preceding steps, vacuum could be introduced to keep the system working in optimum anhydrous conditions. Vacuum may be carried out under a reduced pressure of 5 to 50 millibars (mbar), for a time in the range from 0.5 hour to 3 hours.

Step i) generally takes place at a temperature of 160-180 °C in order to better dissolve the polyether-based TPU. The dissolution generally takes 0.5 to 3 hours. Stirring could be introduced to help dissolving.

In step ii), the polyols other than the polyester polyol could be added one by one or all at once. It is preferably to introduce the polyols under $N_2$ protection so as to keep the system in an oxygen-free environment.

In step iii), before the addition of the polyisocyanate, the temperature generally would be controlled at 110-140 °C for reaction. The reaction generally takes 1 to 3 hours in order to obtain the composition.

During the preparation, the additives could be added optionally. There is no particular limitation on timing of the addition of the additives to the hot melt adhesive composition, as long as the reactive hot melt adhesive composition can be obtained. For example, the additives may be added, together with the polyol and the polyisocyanate in the case of synthesizing the urethane prepolymer. Alternatively, the additives may be added after the urethane prepolymer is formed.

Article and use

in a second aspect, provided is an article comprising at least one substrate and a cured adhesive formed by the reactive hot melt adhesive composition according to the invention. In one embodiment, the at least one substrate is textile. The textile could be these conventionally used in the art, including but not limited to the natural fiber produced textile, the man-made fiber produced textile, or their mixtures. The natural fiber includes but not limited to silk, animal fiber like wool, cotton, linen, and their combinations. The man-made fiber includes but not limited to polyester fiber, nylon fiber, spandex, vinylon, polypropylene fiber, PVC fiber, viscose fiber, acetate fiber, copper ammonia fiber and recycled protein fiber, and their combinations.

In a specific embodiment, the article is a garment or an underwear. The garment or underwear includes but not limited to lingerie, undergarments, brassieres, pants, panties, swimwear, shapers, wetsuits, yoga clothes, camisoles, hosiery, sleepwear, aprons, ties, scrubs, space suits, uniforms, hats, garters, sweatbands, belts, activewear, outerwear, rainwear, cold-weather jackets, shirtings, dresses, blouses, mens and womens tops, sweaters, corsets, vests, knickers, socks, dresses, blouses, aprons, tuxedos, bisht, abaya, hijab, jilbab, thoub, burka, cape, costumes, diving suit, kilt, kimono, jerseys, gowns, protective clothing, sari, sarong, skirts, spats, stola, suits, straitjacket, toga, tights, towel, veils, wetsuit, medical compression garments, bandages, suit interlinings, waistbands, and all components therein. The adhesive composition is particularly suitable when the garment or underwear requires high elastic recovery, and soft wearing experience in addition to desirable adhesive force or peel strength.

According to the invention, the reactive hot melt adhesive composition could be applied to the textile in normal ways. In an embodiment, it could be applied as follows.

i') preheating the adhesive composition as defined above in order to make it liquid,
ii') coating said adhesive composition on a substrate, and then
iii') crosslinking said adhesive composition.

In step i'), the composition could be heated to 90-110°C in the Melter and the temperature of hose could be 100-120°C.

In step ii'), the coating could be performed at 120-140°C.

Step (ii') of coating the substrate is carried out by means of known coating devices, for example a slot coating applicator, a lip-type nozzle or the curtain type, roll coater or a manual coating device also called film-pull or filmograph.

Generally, it employs a basis weight of adhesive composition in the range from 20 to 100 $g/m^2$.

In step iii'), crosslinking occurs in the presence of (atmospheric) humidity (and preferably a relative humidity between 40 and 70% at 23° C.), it has the effect of - creating-between the polymer chains of the polyurethane used according to the invention, and under the action of the (atmospheric) humidity-bonds of the urea type, which lead to the formation of a three-dimensional polymer network.

In a third aspect, provided is use of the reactive hot melt adhesive composition according to the invention for bonding two substrates, wherein at least one of the two substrates is textile. The textile could be as described above for the article.

Beneficial effects

The adhesive composition according to the invention is high in elastic recovery, peel strength, and tensile properties, low in hardness, making it particularly suitable for use in garment manufacturing to replace sewing, and providing excellent wearing experience. The adhesive composition also has relatively low viscosity and processing temperature, which is not only cost saving and energy saving, but also convenient in processing and thus time saving.

## **EXAMPLES**

The present invention will be described below by way of Examples and Comparative Examples. However, the present invention is not limited to these Examples as long as the present invention does not depart from the scope of the present invention.

Testing methods:

Viscosity:

The viscosity is measured according to ASTM D3236-15 by a Brookfield DV2T viscometer using 29# spindle at 150°C. The viscosity was recorded after 15 min at 150°C.

Hardness:

The hardness is measured according to ASTM D2240-15 by a Shore A durometer:

1. Prepare cured samples (the curing time is 120 h) with 10 cm width, 20 cm length and 2 mm thickness;
2. The test specimen is composed of three layers of as-prepared cured sheet;
3. Measure the hardness and the test time is 10 s.

Tensile strength and elongation:

The tensile strength and elongation are measured according to ASTM D412-16 (Test Method A) by an Instron 3366 universal testing system:

1. Prepare cured samples (the curing time is 120 h) with 10 cm width, 20 cm length and 2 mm thickness;
2. Cut dumbbell specimens from the cured samples (Die C), and measure the width and thickness to calculate the cross-sectional area for each dumbbell specimen;
3. Make two marks on each specimen and the distance between two marks is about 2.5 cm;
4. Place the dumbbell specimen in the grips;
5. Start tensile test, record the force and elongation at break, and calculate the tensile strength as follow:

$$TS = F_{(BE)} / A$$

Where:

TS = tensile strength, the stress at rupture, MPa;
$F_{(BE)}$ = the force at rupture, MN;
A = the cross-sectional area of unstrained specimen, $m^2$.

Elastic recovery:

The elastic recovery is measured by an Instron 3366 universal testing system:

1. Prepare cured samples (the curing time is 120 h) with 10 cm width, 20 cm length and 0.5 mm thickness;
2. Cut dumbbell specimens from the cured samples, with the size of Die-C recited in ASTM D412-16;
3. Make two marks on each specimen and the distance between two marks is about 2.5 cm ($L_O$);
4. Place the dumbbell specimen in the grips, separate the grips to extend the distance between two marks from 2.5 cm to 10 cm ($L_E$);
5. Hold for 60 s, then remove the specimen from the grips;
6. Measure the distance between two marks after 180 s ($L_R$), and calculate the elastic recovery as follow:

$$ER\ (\%) = (L_E - L_R) / (L_E - L_O) \times 100$$

Where:

ER = elastic recovery, %;
$L_O$ = the original distance between two marks on the specimen, cm;
$L_E$ = the extended distance between two marks on the specimen, cm;
$L_R$ = the recovered distance between two marks on the specimen, cm.

Peel strength:

The peel strength is measured according to ASTM D1876-08 by an Instron 3366 universal testing system:

1. Prepare an adhesive composition film with 2.5 cm width, 10 cm length and 0.1 mm thickness on release paper, immediately transfer it to 1st piece of fabric (77% Nylon, 23% Spandex) by pressure, then cover the adhesive composition film with 2nd piece of fabric (77% Nylon, 23% Spandex), finally the lamination is completed by hot press machine with the pressing temperature of 50°C, pressing pressure of 2 bar, pressing time of 10s;
2. After 7 days at 25°C and 50%RH, the final peel strength of cured specimens are measured.

Raw materials of the reactive hot melt adhesive compositions used in Examples and Comparative Examples are shown in Table 1 below.

Table 1

| Raw Material | Supplier | Detailed information |
|---|---|---|
| XCP-R2570 | Xuchuan Chemical (Suzhou) Co., Ltd., | Non-crystalline polyester polyol, with Mn of about 5,000 g/mol. |
| CHE-330N | Changhua Chemical Technologhy Co.,Ltd. | Non-linear polyether polyol, with Mn of about 4,800 g/mol. |
| CHE-210 | Changhua Chemical Technologhy Co.,Ltd. | Linear polyether polyol, with Mn of about 1,000 g/mol. |
| PEARLBOND™ 360 | Lubrizol Corporation | Polyether-based TPU, with Shore A hardness of 68. |
| HF-4003LH | Huafon Co.,Ltd. | Polyester-based TPU, with Shore A hardness of 97. |
| AC1630 | EVONIK | Thermoplastic acrylic resin |
| WANNATE® MDI-50 | Wanhua Chemical Group Co.,Ltd. | Isocyanate, a mixture of 2,4' and 4,4' diphenylmethane diisocyanates |

The adhesive compositions of Examples and Comparative Examples are prepared as follows with the amount of the raw materials listed in Table 2:

Example 1:

Polyether-based TPU was added to the non-crystalline polyester polyol to dissolve the polyether-based TPU at 170°C under vacuum. Stirring is performed. Linear polyether polyol was added thereby under $N_2$ protection. Vacuum dehydration was performed at 120°C. Then isocyanate was added to react for 2 hours at 120 °C to obtain the composition.

Example 2:

Polyether-based TPU was added to the non-crystalline polyester polyol to dissolve the polyether-based TPU at 170°C under vacuum. Stirring is performed. Non-linear polyether polyol and linear polyether polyol were added thereby under $N_2$ protection. Vacuum dehydration was performed at 120°C. Then isocyanate was added to react for 2 hours at 120°C to obtain the composition.

Examples 3 to 5:

Polyether-based TPU was added to the non-crystalline polyester polyol to dissolve the polyether-based TPU at 170°C under vacuum. Stirring is performed. After the polyether-based TPU was dissolved completely, the temperature was decreased to 120°C. Then isocyanate was added to react for 2 hours at 120°C to obtain the composition.

Comparative examples 1 to 2:

The same preparation method as Example 2 was conducted, except that polyester-based TPU and thermoplastic acrylic resin are used instead of polyether-based TPU, respectively.

Table 2

| Raw material (g) | E1 | E2 | E3 | E4 | E5 | CE1 | CE2 |
|---|---|---|---|---|---|---|---|
| XCP-R2570 | 330 | 200 | 780 | 710 | 560 | 200 | 200 |
| CHE-330N | - | 200 | - | - | - | 200 | 200 |

(continued)

| Raw material (g) | E1 | E2 | E3 | E4 | E5 | CE1 | CE2 |
|---|---|---|---|---|---|---|---|
| CHE-210 | 450 | 450 | - | - | - | 450 | 450 |
| PEARLBOND™ 360 | 220 | 150 | 220 | 290 | 440 | - | - |
| HF-4003LH | - | - | - | - | - | 150 | - |
| AC1630 | - | - | - | - | - | - | 150 |
| WANNATE® MDI-50 | 163 | 177 | 56 | 68 | 54 | 177 | 177 |
| NCO/OH | 1.25 | 1.25 | 1.5 | 2 | 2 | 1.25 | 1.25 |

The testing results are shown in Table 3.

Table 3

| Example No. | E1 | E2 | E3 | E4 | E5 | CE1 | CE2 |
|---|---|---|---|---|---|---|---|
| Viscosity (mPa.s, 150°C) | 25,720 | 14,850 | 29,160 | 32,500 | 72,350 | 17,500 | 19,450 |
| Elastic recovery (%) | 97 | 98 | 96 | 98 | 99 | 80 | 73 |
| Tensile strength (MPa) | 5.62 | 5.16 | 6.07 | 5.97 | 6.81 | 5.51 | 5.37 |
| Elongation at break (%) | 827 | 617 | 592 | 585 | 713 | 465 | 446 |
| Hardness (Shore A) | 58 | 49 | 61 | 64 | 65 | 71 | 75 |
| Peel Strength (N/25mm) | 56 | 51 | 58 | 61 | 69 | 59 | 55 |

The results show that the compositions of Examples 1 to 5 (E1, E2, E3, E4 and E5) have high elastic recovery, low hardness, suitable viscosity, tensile properties and peel strength. More specifically, with the usage of polyether-based TPU, the composition shows relatively lower hardness, higher elastic recovery when comparing Example 2 with Comparative examples 1 to 2 (CE1 and CE2). In Example 2, with the combining usage of non-linear polyether polyol and linear polyether polyol, the hardness and the viscosity further decrease.

Application process:

The adhesive composition in Examples 1, 2, 3, 4 and 5 were heated to 100°C in the Melter respectively and the temperatures of hose were about 110°C. Then they were dispensed by a slot coating applicator at 130°C for further application on the substrate. In combination with the results shown in Table 3, it shows that the composition of the invention could be easy to process with lower viscosity, and lower processing temperatures, which is cost saving and convenient in processing.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

**Claims**

1. A reactive hot melt adhesive composition comprising:

   a urethane prepolymer having an isocyanate group at the end, and
   at least one polyether-based thermoplastic polyurethane,
   wherein the urethane prepolymer is obtained by a reaction of a polyisocyanate and a polyol, and the polyol comprises at least one polyester polyol.

2. The reactive hot melt adhesive composition according to claim 1, wherein based on the total weight of the composition, the content of the polyether-based thermoplastic polyurethane is 1-50 wt%, preferably 8-35 wt %, more preferably 11-25 wt%.

3.  The reactive hot melt adhesive composition according to claim 1 or 2, wherein the polyether-based thermoplastic polyurethane has a Shore A hardness of 40-90, preferably 50-80, more preferably 60-75.

4.  The reactive hot melt adhesive composition according to any of claims 1 to 3, wherein the polyether-based thermoplastic polyurethane is a reaction product of at least a poly(tetrahydrofuran)-containing polyether polyol, an aliphatic polyol and an aromatic polyisocyanate, preferably the polyether-based thermoplastic polyurethane is a reaction product of at least poly(tetrahydrofuran), butylene glycol and methylene diphenyl diisocyanate.

5.  The reactive hot melt adhesive composition according to claim 4, wherein the polyether-based thermoplastic polyurethane is obtained from a mixture comprising 55-75wt% of poly(tetrahydrofuran)-containing polyether polyol, 1-10wt% of aliphatic polyol, 20-40wt% of aromatic polyisocyanate, based on the total weight of the mixture.

6.  The reactive hot melt adhesive composition according to any of claims 1 to 5, wherein the molar ratio of the total isocyanate groups in the polyisocyanate to the total hydroxyl groups in the polyol (NCO/OH) is in a range of 1.05 to 6, preferably 1.1 to 2.5, more preferably 1.2 to 1.8.

7.  The reactive hot melt adhesive composition according to any of claims 1 to 6, wherein the at least one polyester polyol comprises a non-crystalline polyester polyol.

8.  The reactive hot melt adhesive composition according to any of claims 1 to 7, wherein the polyol further comprises at least one polyether polyol, preferably, the at least one polyether polyol comprises a linear polyether polyol, a non-linear polyether polyol or a combination thereof.

9.  The reactive hot melt adhesive composition according to any of claims 1 to 8, wherein the polyol comprises, based on the total weight of the polyols:

    18-100 wt% of a polyester polyol, preferably 20-30 wt%;
    0-65 wt% of a linear polyether polyol, preferably 45-60 wt%; and
    0-32 wt% of a non-linear polyether polyol, preferably 15-30wt%.

10. The reactive hot melt adhesive composition according to any of claims 1 to 9, wherein the polyol comprises, based on the total weight of the polyols: 40-50 wt% of a polyester polyol and 50-60 wt% of a linear polyether polyol.

11. The reactive hot melt adhesive composition according to any of claims 8 to 10, wherein the number average molecular weight (Mn) of the linear polyether polyol is 200-4,000 g/mol.

12. An article comprising at least one substrate and a cured adhesive formed by the reactive hot melt adhesive composition according to any of the claims 1 to 11.

13. The article of claim 12, wherein the at least one substrate is textile.

14. The article of claim 12 or 13 being a garment or an underwear.

15. Use of the reactive hot melt adhesive composition according to any of claims 1 to 11 for bonding two substrates, wherein at least one of the two substrates is textile.

**EP 4 516 831 A1**

Europäisches Patentamt
European Patent Office
Office européen des brevets

# EUROPEAN SEARCH REPORT

**Application Number**

EP 23 31 5329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/165546 A1 (FULLER H B CO [US]) 13 September 2018 (2018-09-13) * example 1 * | 1-15 | INV. C08G18/30 C08G18/32 C08G18/40 |
| A | Lubrizol: "Estane AG 8451", , 2018, pages 1-1, XP093119432, Retrieved from the Internet: URL:https://www.lubrizol.com/-/media/Lubrizol/Engineered-Polymers/Documents/Engineered-Polymer-TDS/Estane-AG-8451.pdf [retrieved on 2024-01-15] * the whole document * | 1-15 | C08G18/42 C08G18/48 C08G18/76 C09J175/04 C08G18/12 D06M17/10 |
| A | US 2021/269687 A1 (HELMEKE MARIETTA B [US]) 2 September 2021 (2021-09-02) * table 1 * | 1-15 | |
| X | JP H07 17890 B2 (NITTA GELATIN KK; NITTA KK; NITTA VENEER KOGYO KK) 1 March 1995 (1995-03-01) * Comparative example 8 * | 1-15 | |
| X | WO 01/94489 A2 (FULLER H B LICENSING FINANC [US]; ZIMMEL JOHN M [US] ET AL.) 13 December 2001 (2001-12-13) * page 30, line 25 - page 31, line 15 * | 1-15 | |

**TECHNICAL FIELDS SEARCHED (IPC)**

C08G
C09J
D06Q
D06M

The present search report has been drawn up for all claims

| Place of search | Date of completion of the search | Examiner |
|---|---|---|
| Munich | 19 January 2024 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 31 5329

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2024

| Patent document cited in search report | Publication date | Patent family member(s) | | Publication date |
|---|---|---|---|---|
| WO 2018165546 A1 | 13-09-2018 | AU | 2018230473 A1 | 08-08-2019 |
| | | CA | 3051453 A1 | 13-09-2018 |
| | | CN | 110382649 A | 25-10-2019 |
| | | EP | 3592818 A1 | 15-01-2020 |
| | | JP | 7394624 B2 | 08-12-2023 |
| | | JP | 2020510108 A | 02-04-2020 |
| | | KR | 20190124225 A | 04-11-2019 |
| | | PL | 3592818 T3 | 11-04-2023 |
| | | US | 2018258330 A1 | 13-09-2018 |
| | | WO | 2018165546 A1 | 13-09-2018 |
| US 2021269687 A1 | 02-09-2021 | CA | 3165506 A1 | 02-09-2021 |
| | | CN | 115066449 A | 16-09-2022 |
| | | EP | 4110844 A1 | 04-01-2023 |
| | | KR | 20220142434 A | 21-10-2022 |
| | | US | 2021269687 A1 | 02-09-2021 |
| | | WO | 2021173757 A1 | 02-09-2021 |
| JP H0717890 B2 | 01-03-1995 | JP | H0717890 B2 | 01-03-1995 |
| | | JP | H02305881 A | 19-12-1990 |
| WO 0194489 A2 | 13-12-2001 | AU | 6673501 A | 17-12-2001 |
| | | US | 6660376 B1 | 09-12-2003 |
| | | WO | 0194489 A2 | 13-12-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021159377 A1